# EUROPEAN PATENT SPECIFICATION

(11) **EP 4 470 690 B1**
(45) Date of publication and mention of the grant of the patent: **21.10.2026**
(21) Application number: 22942299.3
(22) Date of filing: 07.07.2022
(51) Int. Cl.: H01M 50/107, B21D 19/04, B21D 17/04, B21D 51/26, H01M 10/04

(54) **NECKING AND FLANGING DEVICE AND BATTERY MANUFACTURING EQUIPMENT**
EINHALS- UND BÖRDELVORRICHTUNG UND BATTERIEHERSTELLUNGSAUSRÜSTUNG
DISPOSITIF DE STRICTION ET DE BORDAGE ET ÉQUIPEMENT DE FABRICATION DE BATTERIE

(30) Priority: 20.05.2022 CN 202221208401 U
(43) Date of publication of application: 04.12.2024
(73) Proprietor: Contemporary Amperex Technology (Hong Kong) Limited, Hong Kong (HK)
(72) Inventor: MENG, Hao, Ningde, Fujian 352100 (CN); PAN, Youcheng, Ningde, Fujian 352100 (CN); LUO, Zhixin, Ningde, Fujian 352100 (CN); WEN, Yuqian, Ningde, Fujian 352100 (CN); ZHU, Wenqi, Ningde, Fujian 352100 (CN)
(74) Representative: Ziebig Hengelhaupt Intellectual Property Attorneys Patentanwaltskanzlei PartGmbB
(86) International application number: PCT/CN2022/104464
(87) International publication number: WO 2023/221268

(56) References cited:
- EP-A1- 0 335 602
- EP-A2- 0 113 248
- CN-U- 213 195 387
- US-A- 3 782 314
- US-A- 3 812 696
- US-A- 4 058 998
- US-A- 4 380 165
- US-A- 4 512 172
- US-A1- 2009 151 863

## Description

### TECHNICAL FIELD

This application relates to the field of battery manufacturing technology, and in particular, to a necking and flanging apparatus and an electrical device.

### BACKGROUND

During production of cylindrical batteries, a battery cell is sealed by use of a seaming technique to effectively improve the sealing speed. Before start of the seaming process, a housing of the battery cell needs to be necked and flanged. To be specific, after an electrode assembly is loaded into the housing, the housing is necked by using a necking piece. During the formation of a necked portion of the housing, an opening end of the housing is gradually turned outward to form a flanged portion. The flanged portion is connected to a cover of the housing by a seaming process, so that an inner cavity of the housing forms a closed space.

In some cases, the flanging quality of a flanged portion formed by the necking process is not uniform, thereby seriously affecting the sealing precision and the sealing yield rate. US 4 512 172 A, EP 0 113 248 A2 and US 4 058 998 A disclose necking and flanging apparatuses according to the preamble of the appended claim 1.

### SUMMARY

This application provides a necking and flanging apparatus and a piece of battery manufacturing equipment. The necking and flanging apparatus is structurally integrated to a high degree and can effectively improve the flanging quality and flanging stability of a flanged portion, thereby improving the sealing yield rate of batteries. The battery manufacturing equipment can effectively improve the flanging quality and the yield rate of a housing of a battery.

Some embodiments of this application are implemented in the following way:
According to a first aspect, this application provides a necking and flanging apparatus. The apparatus includes: an inner mold; a necking piece, disposed around the inner mold, where the necking piece is movable along a radial direction of the inner mold, and the necking piece is configured to coordinate with the inner mold to form a necked portion on a housing; and a press-fit piece, disposed around the inner mold, where the press-fit piece is movable along an axial direction of the inner mold, and the press-fit piece is configured to coordinate with the necking piece to press and flatten the flanged portion of the housing.

In the above technical solution, the necking and flanging apparatus includes an inner mold, a necking piece, and a press-fit piece. The inner mold is configured to probe into the housing through an opening end of the housing and support the housing from the inside of the housing, so as to coordinate with the necking piece conveniently to control the depth and precision of the necked portion. The necking piece is disposed around the inner mold, and is configured to act on the outer peripheral surface of the housing. The necking piece is movable along the radial direction of the inner mold relative to the inner mold. To be specific, the necking piece can move on along the radial direction of the housing relative to the housing, so as to form a necked portion on the housing. During the forming of the necked portion, a diameter of the necked portion of the housing decreases. With the formation of the necked portion, the opening end of the housing is turned outward to form a flanged portion. The press-fit piece is movable along the axial direction of the inner mold. After the flanged portion is formed, the press-fit piece moves along the axial direction of the inner mold to approach the necking piece, thereby pressing and flattening the flanged portion between the press-fit piece and the necking piece. The press-fit piece facilitates shaping and flattening of the flanged portion formed by necking. In this way, an outward turning angle of the flanged portion is controllable and more equilibrated, thereby effectively improving the flanging quality of the flanged portion. In addition, the press-fit piece presses and flattens the formed flanged portion, thereby effectively improving the stability of the flanged portion that is folded, reducing the risk of springback and deformation of the flanged portion, and in turn, further improving the precision and structural stability of the flanged portion. The flanging apparatus of this application effectively improves the flanging quality and flanging stability of the housing, and improves the sealing precision and yield rate of the battery.

According to some embodiments of this application, the press-fit piece is ring-shaped, and the press-fit piece is sleeved on the inner mold.

In the above technical solution, the press-fit piece is ring-shaped, and is sleeved on the inner mold. Such arrangement effectively ensures a sufficient contact area between the press-fit piece and the flanged portion. In this way, the force received by the whole flanged portion along the circumferential direction of the housing is more uniform, thereby further improving the quality, equilibrium, and completeness of the flattening of the flanged portion.

According to some embodiments of this application, outer peripheral surfaces of the inner mold include a first outer peripheral surface, a second outer peripheral surface, and a transition surface; a diameter of the first outer peripheral surface is larger than a diameter of the second outer peripheral surface; the transition surface connects the first outer peripheral surface and the second outer peripheral surface; the necking piece is configured to fit the second outer peripheral surface; and the press-fit piece is sleeved on the first outer peripheral surface.

In the above technical solution, the diameter of the first outer peripheral surface is larger than the diameter of the second outer peripheral surface, and the first outer peripheral surface is configured to be in close fit with or in small clearance fit with the inner peripheral surface of the housing, so as to support the housing during the necking of the housing and limit the junction between the flanged portion and the necked portion. The diameter of the second outer peripheral surface is smaller than the diameter of the first outer peripheral surface, making it convenient for the necking piece to move on along the radial direction of the housing relative to the housing so as to form a necked portion on the housing. Affected by the diameter difference between the first outer peripheral surface and the second outer peripheral surface, the opening end of the housing is naturally turned outward at a junction between the first outer peripheral surface and the second outer peripheral surface to form a flanged portion. The transition surface enables smooth transition at a folded position of the flanged portion, and prevents fatigue cracks or even fracture of the housing from occurring at the folded position of the housing due to stress concentration, thereby ensuring the structural strength of the housing.

According to some embodiments of this application, the press-fit piece is slidably connected to the inner mold along the axial direction of the inner mold.

In the above technical solution, the press-fit piece is slidably connected to the inner mold along the axial direction of the inner mold. The inner mold supports and guides the press-fit piece and limits the position of the press-fit piece, thereby effectively improving stability of axial movement of the press-fit piece relative to the inner mold, improving the movement stability of the press-fit piece that receives a reverse force after flattening the flanged portion, and in turn, effectively ensuring the stability of flattening performed by the press-fit piece for the flanged portion.

According to the invention, the necking and flanging apparatus further includes: a first driving assembly, configured to drive the press-fit piece to move along the axial direction of the inner mold.

In the above technical solution, the first driving assembly drives the press-fit piece to move along the axial direction of the inner mold, thereby effectively improving the operation convenience and controllability of the movement of the press-fit piece along the axial direction of the inner mold.

According to the invention, the first driving assembly is mounted on the inner mold.

In the above technical solution, the first driving assembly is mounted on the inner mold. In this way, the first driving assembly and the press-fit piece are connected to the inner mold and can move synchronously with the inner mold, so that the degree of integration of the overall structure is high. When the inner mold is moved out of the housing during replacement of the housing, the press-fit piece can be moved out synchronously and away from the housing, thereby effectively avoiding the interference caused by the press-fit piece on the replacement of the housing. During necking and flanging of the housing, the inner mold synchronously drives the press-fit piece to approach the housing. When the press-fit piece flattens the flanged portion, the first driving assembly just needs to drive the press-fit piece to move for a preset distance relative to the inner mold, thereby reducing a driving stroke of the first driving assembly, facilitating simplification of the structure of the overall necking and flanging apparatus, and reducing the material cost.

According to some embodiments of this application, the press-fit piece includes a first surface oriented toward the necking piece along the axial direction of the inner mold, and the first surface is a flat face perpendicular to the axial direction of the inner mold.

In the above technical solution, the press-fit piece includes a first surface oriented toward the necking piece. The first surface is perpendicular to the axial direction of the inner mold. The first surface acts on the flanged portion. After flattening the flanged portion, the first surface causes the surface of the flanged portion to approximate a flat face as far as practicable. The plane in which the flanged portion is located can be approximately perpendicular to the axial direction of the housing, thereby effectively improving the flatness and evenness of the flanged portion and the equilibrium of the folding angle, and reducing the risk of springback of the flanged portion.

According to some embodiments of this application, a plurality of necking pieces are disposed. The plurality of necking pieces are distributed along a circumferential direction of the inner mold.

In the above technical solution, a plurality of necking pieces are distributed along the circumferential direction of the inner mold. In other words, a plurality of necking pieces can act on different positions in the circumferential direction of the same housing. When performing necking processing, all or part of the necking pieces can act on the housing synchronously. On the one hand, such a structure improves the necking efficiency of the housing. On the other hand, a plurality of necking pieces act on the housing along the circumferential direction of the housing, thereby effectively improving the equilibrium of the force exerted on the housing, and reducing the risk of deformation of the housing caused by the force exerted on a single side of the housing.

According to some embodiments of this application, the necking and flanging apparatus further includes: a second driving assembly, configured to drive the necking piece to move along the radial direction of the inner mold.

In the above technical solution, the second driving assembly is disposed to drive the necking piece to move along the radial direction of the inner mold. To be specific, when necking the housing, the second driving assembly drives the necking piece to move on or withdraw along the radial direction of the housing, so as to form a necked portion on the housing.

According to some embodiments of this application, the necking piece is a necking roller. The necking and flanging apparatus further includes: a third driving assembly, configured to drive the necking roller to revolve around the inner mold.

In the above technical solution, the necking piece is a necking roller. The necking roller can rotate along its own central axis. The third driving assembly drives the necking roller to revolve around the inner mold. In this way, during necking of the housing, the housing and the inner mold can remain stationary. The third driving assembly drives the necking roller to revolve around the housing. During the revolution, the radius of revolution diminishes gradually, and the housing is compressed by force and deformed around the radial direction of the housing until the housing closely fits the inner mold to form a necked portion. The necking roller revolves around the housing as driven by the third driving assembly. Therefore, the housing can be disposed fixedly and keep in a static state together with the inner mold. In contrast to the conventional structure in which the housing rotates around its own central axis, the structure disclosed in the above technical solution can effectively ensure structural stability during the necking of the housing. In addition, the housing is static relative to the inner mold, thereby effectively avoiding the problem that a large amount of metal chips are generated by the sliding of the housing relative to the inner mold, and in turn, reducing the risk of short circuits of the electrode assembly caused by the metal chips falling into the inner cavity of the housing.

According to some embodiments of this application, the necking and flanging apparatus further includes: a fixing mechanism, disposed opposite to the inner mold along the axial direction of the inner mold, and configured to fix the housing.

In the above technical solution, the necking and flanging apparatus fixes the housing through the fixing mechanism, thereby effectively ensuring stable positioning of the housing in the necking and flanging process.

According to some embodiments of this application, the inner mold includes a gas duct. The gas duct is configured to feed a high-pressure gas into the housing.

In the above technical solution, the inner mold includes a gas duct. The gas duct is configured to feed a high-pressure gas into the housing. After being fed into the housing, the high-pressure gas can be expelled out of the housing by no means but through the clearance between the inner peripheral surface of the housing and the outer peripheral surface of the inner mold. In a process of expelling the high-pressure gas out of the housing, the small amount of metal chips that may be generated during the fitting between the inner peripheral surface of the housing and the inner mold can be directly carried away from the housing, thereby preventing the metal chips from falling into the inner cavity of the housing to impair the performance of the battery. The high-pressure gas directly blows away the possible metal chips from the housing to prevent the metal chips from falling down. The structure is simple and highly effective in removing the chips.

According to some embodiments of this application, the gas duct runs through the inner mold along the axial direction of the inner mold.

In the above technical solution, the gas duct runs through the inner mold along the axial direction of the inner mold. When the high-pressure gas is fed into the housing, the high-pressure gas is led downward along the axial direction of the housing to enter the housing, blocked by the electrode assembly in the housing, and then reflected back upward and gushed out upward through the clearance between the inner mold and the housing. In this way, the metal chips that may be generated between the inner mold and the housing are blown out of the housing upward. The gas duct that runs through the inner mold along the axial direction of the inner mold effectively ensures an appropriate flow rate and flow direction of the high-pressure gas, thereby sufficiently exerting the effect of removing metal chips.

According to a second aspect, this application provides a piece of battery manufacturing equipment. The equipment includes the necking and flanging apparatus according to any one of the technical solutions described above. The necking and flanging apparatus is configured to neck and flange the housing of a battery.

Due to the characteristics of the necking and flanging apparatus disclosed in an embodiment in the first aspect of this application, the battery manufacturing equipment in an embodiment in the second aspect of this application can effectively improve the precision and structural stability of the flanged portion, thereby improving the sealing precision and yield rate of the battery.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a housing on which a necked portion and a flanged portion are formed according to some embodiments of this application;
FIG. 2 is a schematic structural diagram of a necking and flanging apparatus according to some embodiments of this application;
FIG. 3 is a top view of a necking and flanging apparatus according to some embodiments of this application;
FIG. 4 is a cross-sectional view of the apparatus sectioned along an A-A direction shown in FIG. 3;
FIG. 5 is a close-up view of a part B shown in FIG. 4;
FIG. 6 is a schematic status diagram of extending an inner mold of a necking and flanging apparatus into a housing according to some embodiments of this application;
FIG. 7 is a close-up view of a part C shown in FIG. 6;
FIG. 8 is a schematic status diagram of a necking and flanging apparatus forming a necked portion on a housing according to some embodiments of this application;
FIG. 9 is a close-up view of a part D shown in FIG. 8;
FIG. 10 is a schematic status diagram of pressing and flattening a flanged portion by a press-fit piece in conjunction with a necking piece of a necking and flanging apparatus according to some embodiments of this application; and
FIG. 11 is a close-up view of a part E shown in FIG. 10.

The drawings are not drawn to scale.

List of reference numerals: 100-necking and flanging apparatus; 10-inner mold; 11-first outer peripheral surface; 12-second outer peripheral surface; 13-transition surface; 14-gas duct; 15-avoidance port; 16-connecting shaft; 20-necking piece; 30-press-fit piece; 31-first surface; 32-connecting portion; 40-fixing mechanism; 200-housing; 210-necked portion; 220-flanged portion.

### DETAILED DESCRIPTION OF EMBODIMENTS

To make the objectives, technical solutions, and advantages of the embodiments of this application clearer, the following gives a clear and complete description of the technical solutions in the embodiments of this application with reference to the drawings in the embodiments of this application. Apparently, the described embodiments are merely a part of but not all of the embodiments of this application. The components described and illustrated in the drawings according to the embodiments of this application generally may be arranged and designed in a variety of different configurations.

Therefore, the following detailed description of the embodiments of this application provided with reference to the drawings is not intended to limit the scope of this application as claimed, but merely represents selected embodiments of this application. All other embodiments derived by a person of ordinary skill in the art based on the embodiments of this application without making any creative efforts still fall within the protection scope of this application.

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "a plurality of" means two or more (inclusive of two).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "dispose", "mount", "concatenate", "connect", and "fix" need to be understood in a broad sense, for example, understood as a fixed connection or a detachable connection or integrally formed; or understood as a mechanical connection, electrical connection, or signal connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

The seaming mentioned in an embodiment of this application is a type of sealing, and a process of sealing the opening of rigid and semi-rigid containers. Seaming is also referred to as roll edge sealing. Seaming is a process of clasping the body of a flanged container and the rim of the container lid together, crimped and pressed tightly to seal the container. Seaming is applicable to metal containers such as an iron container, an aluminum container, or rigid and semi-rigid containers of other materials.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell may include the types such as a lithium-ion battery, a lithium-sulfur battery, a sodium-lithium-ion battery, a sodium-ion battery, or a magnesium-ion battery, and may be a primary battery or a secondary battery. The types of the battery cell are not limited herein.

The battery cell is a minimum unit that makes up a battery. The battery cell includes an end cover, a housing, and an electrode assembly. The housing includes an opening end. The opening end is configured to load the electrode assembly, electrolyte solution, and other components into the housing. The end cover is a component that fits and covers the opening end of the housing to isolate the internal environment of the housing from the external environment. The housing may be made of various materials such as copper, iron, aluminum, and other metals. The housing and end cap may be sealed by seaming.

The applicant hereof finds that when a battery cell is sealed by seaming, the error is relatively large, and the sealing yield rate is low. Through research, the applicant finds that the reason lies in an uneven or insufficient flanging amount of the flanged portion formed in a necking and flanging process of the housing of the battery cell before sealing. In addition, a folding angle of the flanged portion formed in the necking and flanging process is prone to change due to springback and deformation, thereby further aggravating the problem of uneven or insufficient flanging amount. The quality of the flanged portion directly affects the seaming precision and the seaming yield rate of the battery cell.

In view of this, in order to solve the problems of low flanging quality of the housing and low stability of the flanged portion, the applicant hereof has designed a necking and flanging apparatus. The necking and flanging apparatus includes: an inner mold, a necking piece, and a press-fit piece. The necking piece is disposed around the inner mold, where the necking piece is movable along a radial direction of the inner mold, and the necking piece is configured to coordinate with the inner mold to form a necked portion on a housing. The press-fit piece is disposed around the inner mold. The press-fit piece is movable along an axial direction of the inner mold, and the press-fit piece is configured to coordinate with the necking piece to press and flatten the flanged portion of the housing.

In the technical solution of this application, in a process of forming a necked portion on the housing by the necking piece, the diameter of the necked portion of the housing diminishes. With the formation of the necked portion, the opening end of the housing is turned outward to form a flanged portion. The press-fit piece moves along the axial direction of the inner mold to approach the necking piece during the necking by the necking piece or after completion of the necking, thereby facilitating exertion of the guiding, shaping, and flattening effects for the formation of flanged portion. In this way, an outward turning angle of the flanged portion is controllable and more equilibrated, thereby effectively improving the flanging quality of the flanged portion. In addition, the press-fit piece presses and flattens the formed flanged portion, thereby effectively improving the stability of the flanged portion after being folded, reducing the risk of springback and deformation of the flanged portion, and in turn, further improving the precision and structural stability of the flanged portion. The flanging apparatus of this application effectively improves the flanging quality and flanging stability of the housing, and in turn, improves the sealing precision and yield rate of the battery.

The necking and flanging apparatus disclosed in an embodiment of this application is applicable to, but not limited to use in, the necking and flanging processing of containers such as battery housings, cans, and barrels. For brevity and clarity of description, the following embodiments are all described by using an example in which the necking and flanging apparatus is applied to the necking and flanging of battery housings.

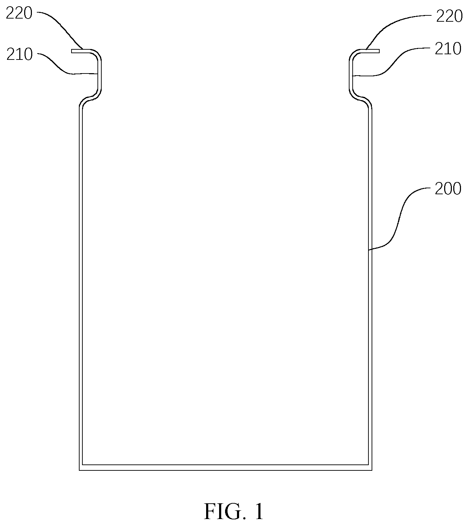

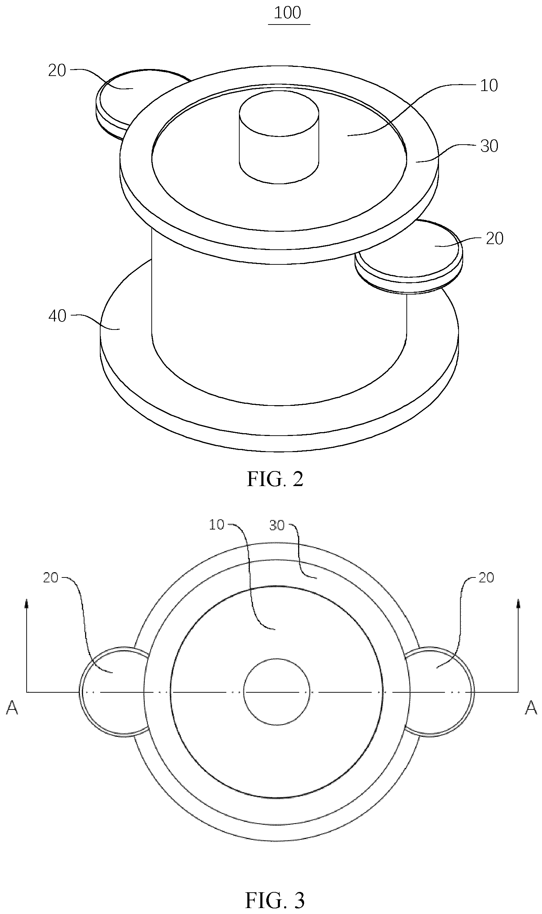

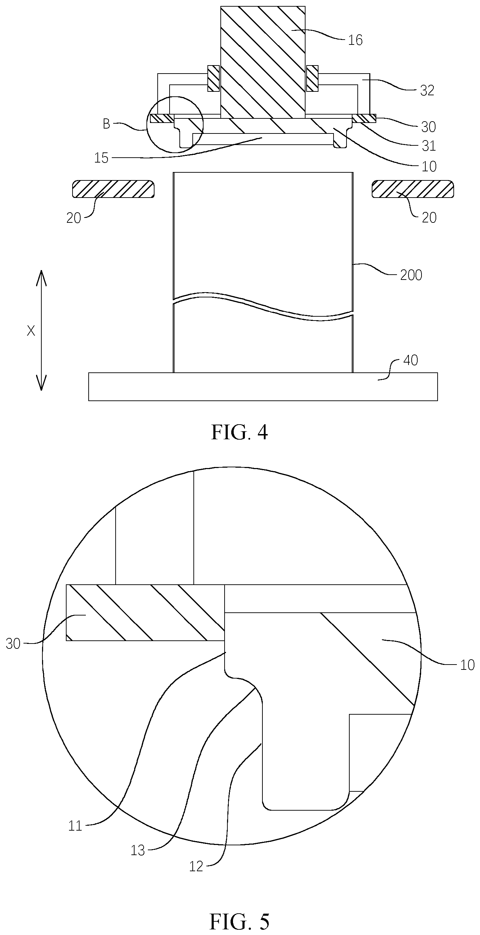

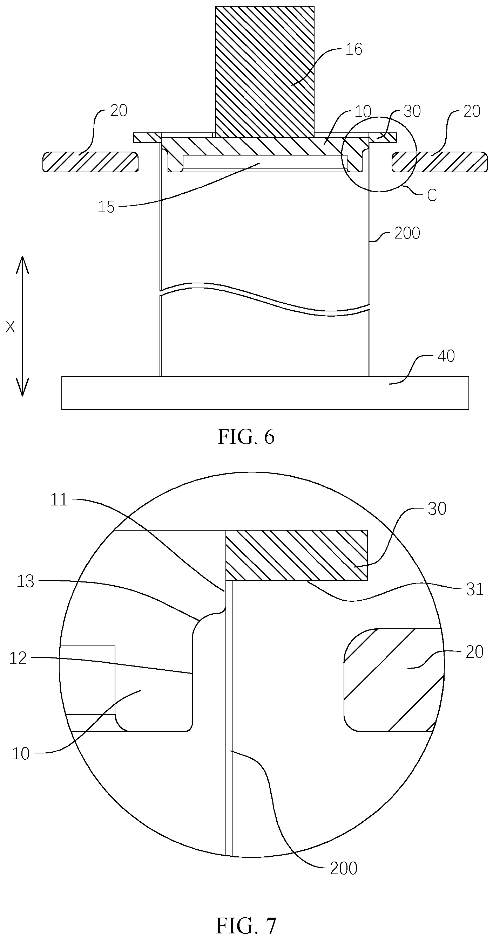

Referring to FIG. 1 to 6, FIG. 1 is a schematic structural diagram of a housing on which a necked portion and a flanged portion are formed according to some embodiments of this application; FIG. 2 is a schematic structural diagram of a necking and flanging apparatus according to some embodiments of this application; FIG. 3 is a top view of a necking and flanging apparatus according to some embodiments of this application; FIG. 4 is a cross-sectional view of the apparatus sectioned along an A-A direction shown in FIG. 3; FIG. 5 is a close-up view of a part B shown in FIG. 4; and FIG. 6 is a schematic status diagram of extending an inner mold of a necking and flanging apparatus into a housing according to some embodiments of this application. Some embodiments of this application provide a necking and flanging apparatus 100. The apparatus includes: an inner mold 10, a necking piece 20, and a press-fit piece 30. The necking piece 20 is disposed around the inner mold 10. The necking piece 20 is movable along a radial direction of the inner mold 10. The necking piece 20 is configured to coordinate with the inner mold 10 to form a necked portion 210 on a housing 200. The press-fit piece 30 is disposed around the inner mold 10. The press-fit piece 30 is movable along an axial direction of the inner mold 10. The press-fit piece 30 is configured to coordinate with the necking piece 20 to press and flatten the flanged portion 220 of the housing 200.

As shown in FIG. 1, the necking portion 210 is a portion at which the housing 200 shrinks radially after being compressed and deformed by a force. The flanged portion 220 is a portion formed by bending the opening end of the housing 200 outward when the housing 200 is compressed and deformed to form the necked portion 210. The flanged portion 220 is configured to implement seaming.

As shown in FIG. 4 and FIG. 6, the inner mold 10 is configured to probe into the housing 200 through the opening end of the housing 200 to support the housing 200 from the inside of the housing 200, and serve to limit the depth of the necked portion 210 finally formed on the housing 200. The inner mold 10 may be connected to a driving mechanism. The driving mechanism drives the inner mold 10 to move along the axial direction of the inner mold, so as to extend into the housing 200 or withdraw from the housing 200. Alternatively, the inner mold 10 may be fixed in position. When the inner mold 10 is fixed in position, the opening end of the housing 200 is just sleeved on the inner mold 10.

The axial direction of the inner mold 10 extends along the X direction shown in FIG. 4. When the necking and flanging apparatus 100 is applied to the necking and flanging process of the housing 200 of a cylindrical battery, the axial direction of the inner mold 10 extends along the axial direction of the housing 200, and the radial direction of the inner mold 10 extends along the radial direction of the housing 200.

The necking piece 20 means a component that coordinates with the inner mold 10 to form a necked portion 210 on the housing 200. The necking piece 20 may be connected to a driving mechanism. The driving mechanism drives the necking piece 20 to move along the radial direction of the inner mold 10, so that the necking piece 20 can move on along the radial direction of the housing 200 to squeeze the housing 200. The housing 200 is compressed and deformed along the radial direction of the housing after being stressed. The necking piece 20 coordinates with the inner mold 10 to exert a force on the housing 200 and limit the position of the housing until the housing 200 forms a necked portion 210. At the same time, the opening end of the housing 200 is gradually turned outward during the necking to elementarily form a flanged portion 220.

In some other embodiments, the necking piece 20 may be fixed instead (that is, the necking piece 20 does not move along the radial direction of the housing 200). During the necking, the housing 200 and the inner mold 10 move synchronously toward the necking piece 20 along the radial direction of the inner mold 10 so that the necking piece 20 squeezes the housing 200.

The necking piece 20 may be a conventional necking piece such as a necking hob or a necking roller. When the necking piece 20 squeezes the housing 200, the housing 200 may rotate around its own central axis, so that the necking piece 20 forms a necked portion 210 on the housing 200. Alternatively, the housing 200 may be kept stationary, and the necking piece 20 may rotate around the circumferential direction of the housing 200. The housing 200 and the inner mold 10 may rotate relative to each other or remain stationary relative to each other.

The press-fit piece 30 is disposed around the inner mold 10. The press-fit piece 30 may assume various structures. For example, the press-fit piece 30 may include a plurality of press-fit portions. The plurality of press-fit portions are spaced out around the circumferential direction of the housing 200. Each press-fit portion can move independently along the axial direction of the inner mold 10. Alternatively, the press-fit piece 30 may be an integral structure. In order to increase the press-fit area of the press-fit piece 30, the press-fit piece 30 may be sleeved around the inner mold 10. The movement of the press-fit piece 30 may be driven manually or by a linear drive mechanism. For example, the press-fit piece 30 may be driven to move by a linear driving piece such as a screw rod or a cylinder.

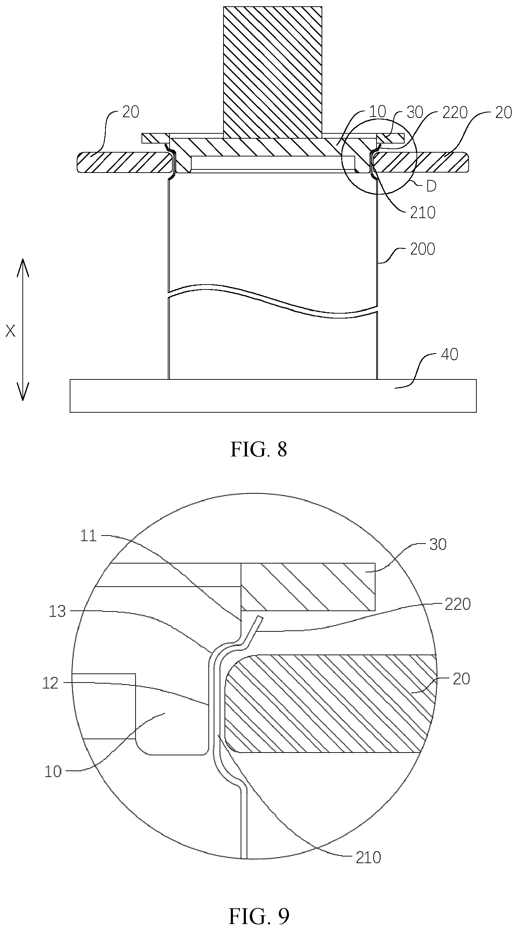

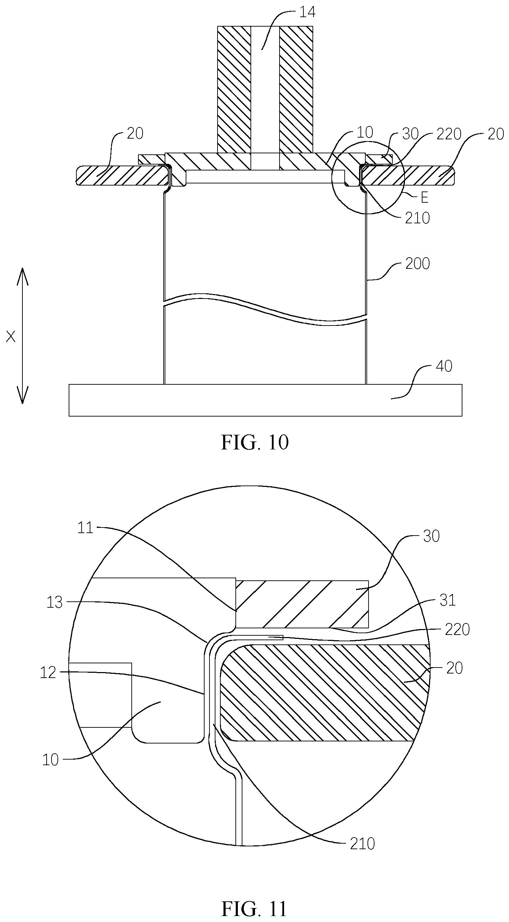

Referring to FIG. 7 to FIG. 11, FIG. 7 is a close-up view of a part C shown in FIG. 6; FIG. 8 is a schematic status diagram of a necking and flanging apparatus forming a necked portion on a housing according to some embodiments of this application; FIG. 9 is a close-up view of a part D shown in FIG. 8; FIG. 10 is a schematic status diagram of pressing and flattening a flanged portion by a press-fit piece in conjunction with a necking piece of a necking and flanging apparatus according to some embodiments of this application; and FIG. 11 is a close-up view of a part E shown in FIG. 10. During the formation of the necked portion 210, the diameter of the necked portion 210 of the housing 200 diminishes gradually. With the formation of the necked portion 210, the opening end of the housing 200 is turned outward to elementarily form the flanged portion 220. During or after the necking, the press-fit piece 30 moves toward the necking piece 20 along the axial direction of the inner mold 10 to gradually clamps the flanged portion 220 tightly between the press-fit piece 30 and the necking piece 20, so as to flatten the flanged portion 220.

The press-fit piece 30 facilitates shaping and flattening of the flanged portion 220 formed by necking. In this way, an outward turning angle of the flanged portion 220 is controllable and more equilibrated, thereby effectively improving the flanging quality of the flanged portion 220. In addition, this effectively improves the stability of the flanged portion 220 that is folded, reduces the risk of springback and deformation of the flanged portion 220, and in turn, further improves the precision and structural stability of the flanged portion 220.

According to some embodiments of this application, as shown in FIG. 2, the press-fit piece 30 is ring-shaped, and the press-fit piece 30 is sleeved on the inner mold 10.

The press-fit piece 30 may be a one-piece ring-shaped structure, or a ring-shaped structure formed by splicing at least two parts.

The inner peripheral surface of the press-fit piece 30 may be at a clearance from, or in slidable fit with, the outer peripheral surface of the inner mold 10.

The width of the press-fit piece 30 along the radial direction of the housing 200 may be greater than a maximum width of the flanged portion 220 that is finally flattened, or less than the maximum width of the flanged portion 220 that is finally flattened. As an example, the width of the press-fit piece 30 along the radial direction of the housing 200 is greater than the width of the flanged portion 220 that is finally flattened, so as to effectively increase the contact area between the press-fit piece 30 and the flanged portion 220.

The flanged portion 220 formed at the opening end of the housing 200 is ring-shaped. The press-fit piece 30 is also in a ring shape and sleeved on the inner mold 10, thereby making it convenient for the press-fit piece 30 to exert an equalized force on the flanged portion 220 along the circumferential direction of the flanged portion, and effectively ensuring sufficient contact between the flanged portion 220 and the press-fit piece 30. Such arrangement effectively ensures a sufficient contact area between the press-fit piece 30 and the flanged portion 220. In this way, the force received by the whole flanged portion 220 along the circumferential direction of the housing 200 is more uniform, thereby further improving the quality, equilibrium, and completeness of the flattening of the flanged portion 220.

According to some embodiments of this application, referring to FIG. 6 and FIG. 7, outer peripheral surfaces of the inner mold 10 include a first outer peripheral surface 11, a second outer peripheral surface 12, and a transition surface 13. A diameter of the first outer peripheral surface 11 is larger than a diameter of the second outer peripheral surface 12. The transition surface 13 connects the first outer peripheral surface 11 and the second outer peripheral surface 12. The necking piece 20 is configured to fit the second outer peripheral surface 12. The press-fit piece 30 is sleeved on the first outer peripheral surface 11.

As shown in FIG. 7, the first outer peripheral surface 11 is closer to the opening end of the housing 200 along the axial direction of the housing 200. The diameter of the first outer peripheral surface 11 may match the inner diameter of the housing 200, so that the first outer peripheral surface 11 abuts the inner peripheral surface of the housing 200. The diameter of the second outer peripheral surface 12 is smaller than the diameter of the first outer peripheral surface 11. The second outer peripheral surface 12 is configured to coordinate with the necking piece 20 to form a necked portion 210 on the housing 200. In addition, when the necking piece 20 exerts a force on the housing 200 to make a wall face of the housing 200 abut on the second outer peripheral surface 12, the opening end of the housing 200 can turn outward and deform along a junction between the first outer peripheral surface 11 and the second outer peripheral surface 12 to form a flanged portion 220.

The diameter of the first outer peripheral surface 11 is larger than the diameter of the second outer peripheral surface 12. The first outer peripheral surface 11 is configured to be in close fit with or in small clearance fit with the inner peripheral surface of the housing 200, so as to support the housing 200 during the necking of the housing 200 and limit the junction between the flanged portion 220 and the necked portion 210. The diameter of the second outer peripheral surface 12 is smaller than the diameter of the first outer peripheral surface 11, making it convenient for the necking piece 20 to move on along the radial direction of the housing 200 relative to the housing 200 so as to form a necked portion 210 on the housing 200. Affected by the diameter difference between the first outer peripheral surface 11 and the second outer peripheral surface 12, the opening end of the housing 200 is naturally turned outward at a junction between the first outer peripheral surface 11 and the second outer peripheral surface 12 to form a flanged portion 220. The transition surface 13 enables smooth transition at a folded position of the flanged portion 220, and prevents fatigue cracks or even fracture of the housing 200 from occurring at the folded position of the housing 200 due to stress concentration, thereby ensuring the structural strength of the housing 200.

In some other embodiments, as shown in FIG. 6, an avoidance port 15 is created at the end of the inner mold 10 along the axial direction of the inner mold. The avoidance port 15 can form an avoidance space into which an electrode assembly can be extended, thereby effectively preventing the inner mold 10 from interfering with the electrode assembly (especially a tab region of the electrode assembly).

According to some embodiments of this application, the press-fit piece 30 is slidably connected to the inner mold 10 along the axial direction of the inner mold 10.

The inner mold 10 and the press-fit piece 30 may be slidably connected to the inner mold 10 through a structure such as a guide rail assembly. For example, a guide rail extending along the axial direction of the inner mold 10 may be mounted on the inner mold 10, and a guide groove in fit with the guide rail may be created on the press-fit piece 30. The guide rail runs through and is embedded in the guide groove until the inner mold 10 is slidably connected to the press-fit piece 30. Alternatively, the guide rail may be mounted on the press-fit piece 30, and the guide groove may be created on the inner mold 10.

As an example, still referring to FIG. 4, the inner mold 10 may include a connecting shaft 16 coaxial with the housing 200. The press-fit piece 30 includes a connecting portion 32. The connecting portion 32 is sleeved on the connecting shaft 16 and slidably connected to the inner mold 10.

The press-fit piece 30 is slidably connected to the inner mold 10 along the axial direction of the inner mold 10. The inner mold 10 supports and guides the press-fit piece 30 and limits the position of the press-fit piece, thereby effectively improving stability of axial movement of the press-fit piece 30 relative to the inner mold 10, improving the movement stability of the press-fit piece 30 that receives a reverse force after flattening the flanged portion 220, and in turn, effectively ensuring the stability of flattening performed by the press-fit piece 30 for the flanged portion 220.

According to the invention, the necking and flanging apparatus 100 further includes a first driving assembly (not shown in the drawing). The first driving assembly is configured to drive the press-fit piece 30 to move along the axial direction of the inner mold 10.

The first driving assembly is an assembly capable of outputting a linear driving force to drive the press-fit piece 30 to move along the axial direction of the inner mold 10. The first driving assembly may be, but is not limited to, a linear cylinder, a screw rod, a single-axis manipulator, or the like, as long as the first driving assembly serves a linear driving function. Details of the first driving assembly are omitted herein.

In such embodiments of this application, the first driving assembly is disposed to enable the press-fit piece 30 to move along the axial direction of the inner mold 10, thereby effectively improving the operation convenience and controllability of the movement of the press-fit piece 30 along the axial direction of the inner mold 10.

According to the invention, the first driving assembly is mounted on the inner mold 10.

The mounting position and mounting method of the first driving assembly on the inner mold 10 may be flexibly selected according to the structure of the press-fit piece 30, as long as the first driving assembly can drive the press-fit piece 30 to move along the axial direction of the inner mold 10.

As an example, the first driving assembly may be a screw-nut assembly. The screw rod of the screw-nut assembly is mounted on the inner mold 10, extends along the axial direction of the inner mold 10, and rotates as driven by a motor. A screw nut is sleeved on the screw rod. The screw nut moves linearly on the screw rod along with the rotation of the screw rod. The press-fit piece 30 is connected to the screw nut by a connecting piece.

The first driving assembly is mounted on the inner mold 10. In this way, the first driving assembly and the press-fit piece 30 are connected to the inner mold 10 and can move synchronously with the inner mold 10, so that the degree of integration of the overall structure is high. When the inner mold 10 is moved out of the housing 200 during replacement of the housing 200, the press-fit piece 30 can be moved out synchronously and away from the housing 200, thereby effectively avoiding the interference caused by the press-fit piece 30 on the replacement of the housing 200. During necking and flanging of the housing 200, the inner mold 10 synchronously drives the press-fit piece 30 to approach the housing 200. When the press-fit piece 30 flattens the flanged portion 220, the first driving assembly just needs to drive the press-fit piece 30 to move for a preset distance relative to the inner mold 10, thereby reducing a driving stroke of the first driving assembly, facilitating simplification of the structure of the overall necking and flanging apparatus 100, and reducing the material cost.

According to some embodiments of this application, the press-fit piece 30 includes a first surface 31 oriented toward the necking piece 20 along the axial direction of the inner mold 10, and the first surface 31 is a flat face perpendicular to the axial direction of the inner mold 10.

As shown in FIG. 11, the first surface 31 is a surface in direct contact with the flanged portion 220. The first surface 31 is a flat face, and can effectively ensure the flatness and evenness of the flanged portion 220. The first surface 31 is perpendicular to the axial direction of the inner mold 10. In this way, it is convenient for the press-fit piece 30 to flatten the flanged portion 220 through the first surface 31 and fix the flanged portion onto the plane that extends along the radial direction of the inner mold 10.

The first surface 31 acts on the flanged portion 220. After flattening the flanged portion 220, the first surface causes the surface of the flanged portion 220 to approximate a flat face as far as practicable. The plane in which the flanged portion 220 is located can be approximately perpendicular to the axial direction of the housing 200, thereby effectively improving the flatness and evenness of the flanged portion 220 and the equilibrium of the folding angle, and reducing the risk of springback of the flanged portion 220.

According to some embodiments of this application, still referring to FIG. 2 and FIG. 4, a plurality of necking pieces 20 are disposed. The plurality of necking pieces 20 are distributed along a circumferential direction of the inner mold 10.

Specifically, the number of necking pieces 20 may be two, three, or even more. A plurality of necking pieces 20 may be distributed apart along the circumferential direction of the inner mold 10. As an example, two necking pieces 20 are disposed. The two necking pieces 20 are evenly distributed along the circumferential direction of the inner mold 10.

Understandably, the plurality of necking pieces 20 may move on synchronously along the radial direction of the inner mold 10 instead. In this way, the housing 200 keeps stationary, and a plurality of necking pieces 20 are driven to revolve around the housing 200, or the housing 200 is driven to rotate, so as to form a necked portion 210 on the housing 200.

When performing necking processing, all necking pieces 20 or a part of the necking pieces 20 act on the housing 200 synchronously. On the one hand, such a structure improves the necking efficiency of the housing 200. On the other hand, a plurality of necking pieces 20 act on the housing 200 along the circumferential direction of the housing 200, thereby effectively improving the equilibrium of the force exerted on the housing 200, and reducing the risk of deformation of the housing 200 caused by the force exerted on a single side of the housing 200.

According to some embodiments of this application, the necking and flanging apparatus 100 further includes a second driving assembly (not shown in the drawing). The second driving assembly is configured to drive the necking piece 20 to move along the radial direction of the inner mold 10.

The second driving assembly is an assembly capable of outputting a linear driving force to drive the necking piece 20 to move along the axial direction of the inner mold 10. The scheme by which the necking piece 20 moves toward the housing 200 through the second driving assembly is a conventional scheme in a necking and flanging process. Therefore, details of the second driving assembly are omitted herein. As an example, the second driving assembly may be, but is not limited to, a linear cylinder, a screw rod, a single-axis manipulator, or the like.

The second driving assembly is disposed to enable the necking piece 20 to move along the radial direction of the inner mold 10. To be specific, when necking the housing 200, the second driving assembly drives the necking piece 20 to move on or withdraw along the radial direction of the housing 200, so as to form a necked portion 210 on the housing 200.

According to some embodiments of this application, the necking piece 20 is a necking roller. The necking and flanging apparatus 100 further includes a third driving assembly (not shown in the drawing). The third driving assembly is configured to drive the necking roller to revolve around the inner mold 10.

Specifically, the central axis of the necking roller extends along the axial direction of the inner mold 10, and can rotate around its own central axis. The third driving assembly is a component capable of outputting a rotary driving force to drive the necking piece 20 to move along the circumferential direction of the inner mold 10. The third driving assembly may be, but is not limited to, a rotary driving assembly such as a turntable driven by a motor, or a ring gear. The scheme by which the necking piece 20 is driven by rotation of the driving mechanism to revolve around the housing 200 is a conventional scheme in a necking and flanging process. Therefore, details of the third driving assembly are omitted herein.

The necking piece 20 is a necking roller. The necking roller can rotate along its own central axis. The third driving assembly drives the necking roller to revolve around the inner mold 10. In this way, during necking of the housing 200, the housing 200 and the inner mold 10 can remain stationary. The third driving assembly drives the necking roller to revolve around the housing 200. During the revolution, the radius of revolution diminishes gradually, and the housing 200 is compressed by force and deformed around the radial direction of the housing until the housing closely fits the inner mold 10 to form a necked portion 210. In contrast to the conventional structure in which the housing 200 rotates around its own central axis, the structure disclosed in the above technical solution can effectively ensure structural stability during the necking of the housing 200. In addition, the housing 200 is static relative to the inner mold 10, thereby effectively avoiding the problem that a large amount of metal chips are generated by the sliding of the housing 200 relative to the inner mold 10, and in turn, reducing the risk of short circuits of the electrode assembly caused by the metal chips falling into the inner cavity of the housing 200.

According to some embodiments of this application, as shown in FIG. 10, the necking and flanging apparatus 100 further includes a fixing mechanism 40. The fixing mechanism 40 is disposed opposite to the inner mold 10 along the axial direction of the inner mold 10, and configured to fix the housing 200.

The fixing mechanism 40 is configured to limit the movement of the housing 200. The fixing mechanism 40 may be an openable clamping mechanism to implement detachable fixing of the housing 200. The scheme by which the housing 200 is fixed by a clamping mechanism is a conventional solution in the necking and flanging process. Therefore, details of the fixing mechanism 40 are omitted herein. As an example, the fixing mechanism 40 may include two V-shaped blocks disposed toward each other and two linear driving pieces (such as linear cylinders). The driving end of each linear driving piece is connected to a V-shaped block. The two linear driving pieces drive the two V-shaped blocks to move toward each other along the radial direction of the housing 200 to clamp the housing 200 between the two V-shaped blocks. The two linear driving pieces drive the two V-shaped blocks to move away from each other along the radial direction of the housing 200, so as to release the clamping and fixing of the housing 200.

The necking and flanging apparatus 100 fixes the housing 200 through the fixing mechanism 40, thereby effectively ensuring stable positioning of the housing 200 in the necking and flanging process.

According to some embodiments of this application, as shown in FIG. 10, the inner mold 10 includes a gas duct 14. The gas duct 14 is configured to feed a high-pressure gas into the housing 200.

Understandably, after the inner mold 10 extends into the housing 200, one end of the gas duct 14 is configured to be connected to a high-pressure gas source, and the other end of the gas duct 14 communicates with the inner cavity of the housing 200, so as to feed the high-pressure gas into the housing 200.

The inner mold 10 extends into the opening end of the housing 200. Therefore, after being fed into the housing 200, the high-pressure gas can be expelled out of the housing 200 by no means but through the clearance between the inner peripheral surface of the housing 200 and the outer peripheral surface of the inner mold 10. In a process of expelling the high-pressure gas out of the housing 200, the small amount of metal chips that may be generated during the fitting between the inner peripheral surface of the housing 200 and the inner mold 10 can be directly carried away from the housing 200, thereby preventing the metal chips from falling into the inner cavity of the housing 200 to impair the performance of the battery. The high-pressure gas directly blows away the possible metal chips from the housing 200 to prevent the metal chips from falling down. The structure is simple and highly effective in removing the chips.

According to some embodiments of this application, the gas duct 14 runs through the inner mold 10 along the axial direction of the inner mold 10.

The gas duct 14 runs through the inner mold 10 along the axial direction of the inner mold 10, which means that the gas duct 14 extends along the axial direction of the inner mold 10 and runs through the inner mold 10. The central axis of the gas duct 14 may coincide with or be parallel to the central axis of the inner mold 10. As an example, in order to further improve the equilibrium of the housing 200 from which the high-pressure gas is expelled, the central axis of the gas duct 14 coincides with the central axis of the inner mold 10.

When the high-pressure gas is fed into the housing 200, the high-pressure gas is led downward along the axial direction of the housing 200 to enter the housing 200, blocked by the electrode assembly in the housing 200, and then reflected back upward and gushed out upward through the clearance between the inner mold 10 and the housing 200. In this way, the metal chips that may be generated between the inner mold 10 and the housing 200 are blown out of the housing 200 upward. The gas duct 14 that runs through the inner mold 10 along the axial direction of the inner mold 10 effectively ensures an appropriate flow rate and flow direction of the high-pressure gas, thereby sufficiently exerting the effect of removing metal chips.

Referring to FIG. 2 to FIG. 11, some embodiments of this application provide a necking and flanging apparatus 100. The necking and flanging apparatus 100 includes an inner mold 10, a necking piece 20, a press-fit piece 30, a first driving assembly, a second driving assembly, a third driving assembly, and a fixing mechanism 40. Outer peripheral surfaces of the inner mold 10 include a first outer peripheral surface 11, a second outer peripheral surface 12, and a transition surface 13. A diameter of the first outer peripheral surface 11 is larger than a diameter of the second outer peripheral surface 12. The transition surface 13 connects the first outer peripheral surface 11 and the second outer peripheral surface 12.

The necking piece 20 is disposed around the inner mold 10. The necking piece 20 is a necking roller. Four necking rollers are disposed. The four necking rollers are evenly distributed around the circumferential direction of the inner mold 10. The second driving assembly can drive the necking roller to move along the radial direction of the inner mold 10. At the same time, the third driving assembly can drive the four necking rollers to revolve around the inner mold 10. The necking piece 20 is configured to coordinate with the second outer peripheral surface 12 to form a necked portion 210 on the housing 200.

The press-fit piece 30 is ring-shaped and sleeved on the first outer peripheral surface 11 of the inner mold 10. The first driving assembly is mounted on the inner mold 10. The first driving assembly is configured to drive the press-fit piece 30 to move along the axial direction of the inner mold 10. The press-fit piece 30 includes a first surface 31 oriented toward the necking piece 20 along the axial direction of the inner mold 10. The first surface 31 is a flat face perpendicular to the axial direction of the inner mold 10. The first surface 31 of the press-fit piece 30 coordinates with the necking roller to press and flatten the flanged portion 220 of the housing 200.

The fixing mechanism 40 is disposed opposite to the inner mold 10 along the axial direction of the inner mold 10. The fixing mechanism 40 is configured to fix the housing 200.

In a process of necking and flanging the housing 200 by using the necking and flanging apparatus 100 of this application, the housing 200 is fixed by the fixing mechanism 40, so that the opening end of the housing 200 is oriented toward the inner mold 10. The inner mold 10 extends into the housing 200 through the opening end. The first outer peripheral surface 11 of the inner mold 10 matches the inner peripheral surface of the housing 200. In this case, a clearance exists between the first surface 31 of the press-fit piece 30 and the end portion of the opening end of the housing 200. The second driving assembly drives the necking roller to move on along the radial direction of the housing 200 until the necking roller abuts the housing 200. The third driving assembly drives the necking roller to revolve around the housing 200. At the same time, the second driving assembly drives the necking roller to further move on along the radial direction of the housing 200. In this way, the radius of revolution of the necking roller diminishes gradually, and the necking roller squeezes the housing 200 to compress and deform the housing 200 until the necked portion 210 closely fits the second outer peripheral surface 12 of the inner mold 10. In this process, the opening end of the housing 200 is turned outward gradually along the junction between the first outer peripheral surface 11 and the second outer peripheral surface 12 to form an elementary flanged portion 220.

The first driving assembly drives the press-fit piece 30 to approach the necking roller along the axial direction of the inner mold 10 until the flanged portion 220 is tightly clamped and flattened between the necking roller and the press-fit piece 30.

Understandably, the press-fit piece 30 may press and flatten the flanged portion 220 after the necked portion 210 is completely formed, or press down the flanged portion gradually at the same time as forming the necked portion 210 (that is, during the formation of the flanged portion 220) until the necked portion 210 is formed and the flanged portion 220 is flattened between the press-fit piece 30 and the necking roller.

An embodiment of this application further provides a piece of battery manufacturing equipment. The equipment includes the necking and flanging apparatus 100 according to any one of the technical solutions described above. The necking and flanging apparatus 100 is configured to neck and flange the housing 200 of a battery.
This application is not limited to the specific embodiments disclosed herein, but includes all technical solutions falling within the scope of the claims.

## Claims

1. A necking and flanging apparatus (100), wherein the apparatus comprises:
an inner mold (10);
a necking piece (20), disposed around the inner mold (10), wherein the necking piece (20) is movable along a radial direction of the inner mold (10), and the necking piece (20) is configured to coordinate with the inner mold (10) to form a necked portion (210) on a housing (200); and
a press-fit piece (30), disposed around the inner mold (10), wherein the press-fit piece (30) is movable along an axial direction of the inner mold (10), and the press-fit piece (30) is configured to coordinate with the necking piece (20) to press and flatten the flanged portion (220) of the housing (200);
wherein the necking and flanging apparatus (100) further comprises:
a first driving assembly, configured to drive the press-fit piece (30) to move along the axial direction of the inner mold (10); **characterized in that**
the first driving assembly is mounted on the inner mold (10); and
the first driving assembly and the press-fit piece (30) are connected to the inner mold (10) and can move synchronously with the inner mold (10).

2. The necking and flanging apparatus (100) according to claim 1, wherein the press-fit piece (30) is ring-shaped, and the press-fit piece (30) is sleeved on the inner mold (10).

3. The necking and flanging apparatus (100) according to claim 2, wherein outer peripheral surfaces of the inner mold (10) comprise a first outer peripheral surface (11), a second outer peripheral surface (12), and a transition surface (13); a diameter of the first outer peripheral surface (11) is larger than a diameter of the second outer peripheral surface (12); the transition surface (13) connects the first outer peripheral surface (11) and the second outer peripheral surface (12); the necking piece (20) is configured to coordinate with the second outer peripheral surface (12); and the press-fit piece (30) is sleeved on the first outer peripheral surface (11).

4. The necking and flanging apparatus (100) according to any one of claims 1 to 3, wherein the press-fit piece (30) is slidably connected to the inner mold (10) along the axial direction of the inner mold (10).

5. The necking and flanging apparatus (100) according to any one of claims 1 to 4, wherein the press-fit piece (30) comprises a first surface (31) oriented toward the necking piece (20) along the axial direction of the inner mold (10), and the first surface (31) is a flat face perpendicular to the axial direction of the inner mold (10).

6. The necking and flanging apparatus (100) according to any one of claims 1 to 5, wherein a plurality of necking pieces (20) are disposed, and the plurality of necking pieces (20) are distributed along a circumferential direction of the inner mold (10).

7. The necking and flanging apparatus (100) according to any one of claims 1 to 6, wherein the necking and flanging apparatus (100) further comprises:
a second driving assembly, configured to drive the necking piece (20) to move along the radial direction of the inner mold (10).

8. The necking and flanging apparatus (100) according to any one of claims 1 to 7, wherein the necking piece (20) is a necking roller, and the necking and flanging apparatus (100) further comprises:
a third driving assembly, configured to drive the necking roller to revolve around the inner mold (10).

9. The necking and flanging apparatus (100) according to any one of claims 1 to 8, wherein the necking and flanging apparatus (100) further comprises:
a fixing mechanism (40), disposed opposite to the inner mold (10) along the axial direction of the inner mold (10), and configured to fix the housing (200).

10. The necking and flanging apparatus (100) according to any one of claims 1 to 9, wherein the inner mold (10) comprises a gas duct (14), and the gas duct (14) is configured to feed a high-pressure gas into the housing (200).

11. The necking and flanging apparatus (100) according to claim 10, wherein the gas duct (14) runs through the inner mold (10) along the axial direction of the inner mold (10).

12. A piece of battery manufacturing equipment, wherein the equipment comprises the necking and flanging apparatus (100) according to any one of claims 1 to 11, and the necking and flanging apparatus (100) is configured to neck and flange the housing (200) of a battery.

## Patentansprüche

1. Einzieh- und Bördelvorrichtung (100), wobei die Vorrichtung umfasst:
eine Innenform (10);
ein Einziehstück (20), das um die Innenform (10) herum angeordnet ist, wobei das Einziehstück (20) entlang einer radialen Richtung der Innenform (10) beweglich ist und das Einziehstück (20) dazu ausgebildet ist, mit der Innenform (10) zusammenzuwirken, um einen eingezogenen Abschnitt (210) an einem Gehäuse (200) zu bilden; und
ein Pressfügestück (30), das um die Innenform (10) herum angeordnet ist, wobei das Pressfügestück (30) entlang einer axialen Richtung der Innenform (10) beweglich ist und das Pressfügestück (30) dazu ausgebildet ist, mit dem Einziehstück (20) zusammenzuwirken, um den gebördelten Abschnitt (220) des Gehäuses (200) zu pressen und flachzudrücken;
wobei die Einzieh- und Bördelvorrichtung (100) ferner umfasst:
eine erste Antriebsbaugruppe, die dazu ausgebildet ist, das Pressfügestück (30) dazu anzutreiben, sich entlang der axialen Richtung der Innenform (10) zu bewegen; **dadurch gekennzeichnet, dass**
die erste Antriebsbaugruppe an der Innenform (10) montiert ist; und
die erste Antriebsbaugruppe und das Pressfügestück (30) mit der Innenform (10) verbunden sind und sich synchron mit der Innenform (10) bewegen können.

2. Einzieh- und Bördelvorrichtung (100) nach Anspruch 1, wobei das Pressfügestück (30) ringförmig ist und das Pressfügestück (30) auf die Innenform (10) aufgesteckt ist.

3. Einzieh- und Bördelvorrichtung (100) nach Anspruch 2, wobei äußere Umfangsflächen der Innenform (10) eine erste äußere Umfangsfläche (11), eine zweite äußere Umfangsfläche (12) und eine Übergangsfläche (13) umfassen; ein Durchmesser der ersten äußeren Umfangsfläche (11) größer ist als ein Durchmesser der zweiten äußeren Umfangsfläche (12); die Übergangsfläche (13) die erste äußere Umfangsfläche (11) und die zweite äußere Umfangsfläche (12) verbindet; das Einziehstück (20) dazu ausgebildet ist, mit der zweiten äußeren Umfangsfläche (12) zusammenzuwirken; und das Pressfügestück (30) auf die erste äußere Umfangsfläche (11) aufgesteckt ist.

4. Einzieh- und Bördelvorrichtung (100) nach einem der Ansprüche 1 bis 3, wobei das Pressfügestück (30) entlang der axialen Richtung der Innenform (10) gleitend mit der Innenform (10) verbunden ist.

5. Einzieh- und Bördelvorrichtung (100) nach einem der Ansprüche 1 bis 4, wobei das Pressfügestück (30) eine erste Fläche (31) umfasst, die entlang der axialen Richtung der Innenform (10) zu dem Einziehstück (20) hin ausgerichtet ist, und die erste Fläche (31) eine zur axialen Richtung der Innenform (10) senkrechte ebene Fläche ist.

6. Einzieh- und Bördelvorrichtung (100) nach einem der Ansprüche 1 bis 5, wobei eine Mehrzahl von Einziehstücken (20) angeordnet ist und die Mehrzahl von Einziehstücken (20) entlang einer Umfangsrichtung der Innenform (10) verteilt ist.

7. Einzieh- und Bördelvorrichtung (100) nach einem der Ansprüche 1 bis 6, wobei die Einzieh- und Bördelvorrichtung (100) ferner umfasst:
eine zweite Antriebsbaugruppe, die dazu ausgebildet ist, das Einziehstück (20) dazu anzutreiben, sich entlang der radialen Richtung der Innenform (10) zu bewegen.

8. Einzieh- und Bördelvorrichtung (100) nach einem der Ansprüche 1 bis 7, wobei das Einziehstück (20) eine Einziehrolle ist und die Einzieh- und Bördelvorrichtung (100) ferner umfasst:
eine dritte Antriebsbaugruppe, die dazu ausgebildet ist, die Einziehrolle dazu anzutreiben, um die Innenform (10) umzulaufen.

9. Einzieh- und Bördelvorrichtung (100) nach einem der Ansprüche 1 bis 8, wobei die Einzieh- und Bördelvorrichtung (100) ferner umfasst:
einen Fixiermechanismus (40), der entlang der axialen Richtung der Innenform (10) gegenüberliegend zu der Innenform (10) angeordnet und dazu ausgebildet ist, das Gehäuse (200) zu fixieren.

10. Einzieh- und Bördelvorrichtung (100) nach einem der Ansprüche 1 bis 9, wobei die Innenform (10) einen Gaskanal (14) umfasst und der Gaskanal (14) dazu ausgebildet ist, ein Hochdruckgas in das Gehäuse (200) einzuleiten.

11. Einzieh- und Bördelvorrichtung (100) nach Anspruch 10, wobei der Gaskanal (14) entlang der axialen Richtung der Innenform (10) durch die Innenform (10) verläuft.

12. Batterieherstellungsausrüstung, wobei die Ausrüstung die Einzieh- und Bördelvorrichtung (100) nach einem der Ansprüche 1 bis 11 umfasst und die Einzieh- und Bördelvorrichtung (100) dazu ausgebildet ist, das Gehäuse (200) einer Batterie einzuziehen und zu bördeln.

## Revendications

1. Appareil de rétreint et de bordage (100), dans lequel l'appareil comprend :
un moule intérieur (10) ;
une pièce de rétreint (20), disposée autour du moule intérieur (10), dans laquelle la pièce de rétreint (20) est mobile le long d'une direction radiale du moule intérieur (10), et la pièce de rétreint (20) est configurée pour coopérer avec le moule intérieur (10) afin de former une portion rétreinte (210) sur un boîtier (200) ; et
une pièce de pressage-assemblage (30), disposée autour du moule intérieur (10), dans laquelle la pièce de pressage-assemblage (30) est mobile le long d'une direction axiale du moule intérieur (10), et la pièce de pressage-assemblage (30) est configurée pour coopérer avec la pièce de rétreint (20) afin de presser et d'aplatir la portion bordée (220) du boîtier (200) ;
dans lequel l'appareil de rétreint et de bordage (100) comprend en outre :
un premier ensemble d'entraînement, configuré pour entraîner la pièce de pressage-assemblage (30) à se déplacer le long de la direction axiale du moule intérieur (10) ;
**caractérisé en ce que**
le premier ensemble d'entraînement est monté sur le moule intérieur (10) ; et
le premier ensemble d'entraînement et la pièce de pressage-assemblage (30) sont reliés au moule intérieur (10) et peuvent se déplacer de manière synchrone avec le moule intérieur (10).

2. Appareil de rétreint et de bordage (100) selon la revendication 1, dans lequel la pièce de pressage-assemblage (30) est annulaire, et la pièce de pressage-assemblage (30) est emmanchée sur le moule intérieur (10).

3. Appareil de rétreint et de bordage (100) selon la revendication 2, dans lequel des surfaces périphériques extérieures du moule intérieur (10) comprennent une première surface périphérique extérieure (11), une deuxième surface périphérique extérieure (12) et une surface de transition (13) ; un diamètre de la première surface périphérique extérieure (11) est supérieur à un diamètre de la deuxième surface périphérique extérieure (12) ; la surface de transition (13) relie la première surface périphérique extérieure (11) et la deuxième surface périphérique extérieure (12) ; la pièce de rétreint (20) est configurée pour coopérer avec la deuxième surface périphérique extérieure (12) ; et la pièce de pressage-assemblage (30) est emmanchée sur la première surface périphérique extérieure (11).

4. Appareil de rétreint et de bordage (100) selon l'une quelconque des revendications 1 à 3, dans lequel la pièce de pressage-assemblage (30) est reliée de manière coulissante au moule intérieur (10) le long de la direction axiale du moule intérieur (10).

5. Appareil de rétreint et de bordage (100) selon l'une quelconque des revendications 1 à 4, dans lequel la pièce de pressage-assemblage (30) comprend une première surface (31) orientée vers la pièce de rétreint (20) le long de la direction axiale du moule intérieur (10), et la première surface (31) est une face plane perpendiculaire à la direction axiale du moule intérieur (10).

6. Appareil de rétreint et de bordage (100) selon l'une quelconque des revendications 1 à 5, dans lequel une pluralité de pièces de rétreint (20) sont disposées, et la pluralité de pièces de rétreint (20) sont réparties le long d'une direction circonférentielle du moule intérieur (10).

7. Appareil de rétreint et de bordage (100) selon l'une quelconque des revendications 1 à 6, dans lequel l'appareil de rétreint et de bordage (100) comprend en outre :
un deuxième ensemble d'entraînement, configuré pour entraîner la pièce de rétreint (20) à se déplacer le long de la direction radiale du moule intérieur (10).

8. Appareil de rétreint et de bordage (100) selon l'une quelconque des revendications 1 à 7, dans lequel la pièce de rétreint (20) est un rouleau de rétreint, et l'appareil de rétreint et de bordage (100) comprend en outre :
un troisième ensemble d'entraînement, configuré pour entraîner le rouleau de rétreint à tourner autour du moule intérieur (10).

9. Appareil de rétreint et de bordage (100) selon l'une quelconque des revendications 1 à 8, dans lequel l'appareil de rétreint et de bordage (100) comprend en outre :
un mécanisme de fixation (40), disposé à l'opposé du moule intérieur (10) le long de la direction axiale du moule intérieur (10), et configuré pour fixer le boîtier (200).

10. Appareil de rétreint et de bordage (100) selon l'une quelconque des revendications 1 à 9, dans lequel le moule intérieur (10) comprend un conduit de gaz (14), et le conduit de gaz (14) est configuré pour introduire un gaz haute pression dans le boîtier (200).

11. Appareil de rétreint et de bordage (100) selon la revendication 10, dans lequel le conduit de gaz (14) traverse le moule intérieur (10) le long de la direction axiale du moule intérieur (10).

12. Équipement de fabrication de batterie, dans lequel l'équipement comprend l'appareil de rétreint et de bordage (100) selon l'une quelconque des revendications 1 à 11, et l'appareil de rétreint et de bordage (100) est configuré pour rétreindre et border le boîtier (200) d'une batterie.
